**Europäisches Patentamt**

**European Patent Office**

**Office européen des brevets**

(19)

(11) Veröffentlichungsnummer: **0 073 530**
**B1**

(12) **EUROPÄISCHE PATENTSCHRIFT**

(45) Veröffentlichungstag der Patentschrift:
24.07.85

(51) Int. Cl.⁴: **C 08 L 81/04**, C 09 D 5/34

(21) Anmeldenummer: **82200606.0**

(22) Anmeldetag: **18.05.82**

(54) **Heiss applizier- und härtbare Dichtungsmasse und ihre Verwendung.**

(30) Priorität: **28.08.81 DE 3134151**

(43) Veröffentlichungstag der Anmeldung:
**09.03.83 Patentblatt 83/10**

(45) Bekanntmachung des Hinweises auf die Patenterteilung:
**24.07.85 Patentblatt 85/30**

(84) Benannte Vertragsstaaten:
**DE FR GB IT**

(56) Entgegenhaltungen:
**EP - A - 0 006 698**
**EP - A - 0 008 845**
**EP - A - 0 009 297**
**FR - A - 2 125 606**

**"High Polymers", Vol. XIII, Part III, "Polyethers", S. 128**

**Die Akte enthält technische Angaben, die nach dem Eingang der Anmeldung eingereicht wurden und die nicht in dieser Patentschrift enthalten sind.**

(73) Patentinhaber: **Rütgerswerke Aktiengesellschaft, Mainzer Landstrasse 217, D-6000 Frankfurt a.Main 1 (DE)**

(72) Erfinder: **Schöllhorn, Wolf-Dietrich, Jakobstrasse 29, D-6718 Grünstadt (DE)**
Erfinder: **Hockenberger, Lothar, Dr., Brahmsstrasse 13, D-6700 Ludwigshafen (DE)**

## Beschreibung

Die Erfindung betrifft eine heiss applizier- und härtbare Dichtungsmasse auf Basis von Polysulfidpolymeren.

Dichtungsmassen auf Basis von flüssigen Polysulfidpolymeren zur dauerelastischen Abdichtung von Fugen aller Art sind seit Jahrzehnten hinlänglich bekannt.

Eine grosse Anwendung haben solche Dichtungsmassen bei der Herstellung von Isolierglaseinheiten erfahren.

Eine Isolierglaseinheit besteht im einfachsten Fall aus zwei Glasplatten, die durch einen umlaufenden Steg auf einen bestimmten Abstand gehalten und durch eine dauerelastische Masse zwischen den beiden Glasplatten und dem Steg verbunden sind.

Zur dauerelastischen Abdichtung solcher Isolierglasscheiben werden heute vornehmlich zweikomponentige Versiegelungsmassen auf Basis flüssiger Polysulfidpolymere eingesetzt. Vor der Applikation der Dichtungsmasse muss die Massenkomponente A mit der Härtekomponente B exakt dosiert und homogen vermischt werden. Dies kann sowohl im Handverfahren als auch mit entsprechenden Maschinen bewerkstelligt werden. Unabdingbar für beide Verfahren ist jedoch eine genügend lange Topfzeit der Dichtungsmasse. Aus fabrikationstechnischen Gründen soll sie zwischen 30 - 90 Minuten liegen. Die klebfreie Aushärtung stellt sich dann nach 3 bis 9 Stunden bei Raumtemperatur ein.

Ein anderes System, das diese Aushärtungszeiten nicht benötigt, ist ein System zur Verklebung von Isoliergläsern mit Hilfe der sogenannten «Hot-Melt»-Massen auf Basis von thermoplastischem Butylkautschuk. Der generelle Nachteil solcher «Hot-Melt»-Versiegelungsmassen ist in der reversiblen Erstarrung und in dem plastischen Verhalten solcher Massen zu sehen. Die Erweichung der Fuge bei Temperaturanstieg und dadurch die Gefahr der möglichen Verschiebung der einzelnen Glasscheiben gegeneinander birgt eine nicht zu unterschätzende Gefahr in sich.

Wünschenswert für den Hersteller von Isolierglaseinheiten ist daher eine Masse, die die guten Eigenschaften von Polysulfidpolymeren besitzen, die sich aber analog der thermoplastischen Massen verarbeiten lassen, wobei die dabei verwendeten Maschinen benutzt werden können.

In der EP-PS 0 006 698, EP-PS 0 008 845 und dem USP 4 165 425 werden heiss applizierbare Massen auf Basis von flüssigen Polysulfidpolymeren beschrieben. In allen drei Fällen werden aus flüssigen Polysulfidpolymeren mit endständigen SH-Gruppen vorvernetzte feste Polymerprodukte hergestellt, welche bei Temperaturen von 150°C bis 200°C kurzzeitig verflüssigen und sofort irreversibel erhärten. Diese Produkte haben den Nachteil, dass sie nicht auf einem niedrigen Temperaturniveau wie etwa 100°C verarbeitet werden können.

Aufgabe der Erfindung war es, eine Dichtungsmasse auf Basis von Polysulfidpolymeren zu entwickeln, die bei Temperaturen um 100°C leicht ausspritzbar ist und über einen längeren Zeitraum in diesem Zustand gehalten werden kann. Bei Einwirkung höherer Temperatur soll eine dann irreversible Aushärtung zu einem gummielastischen Material erfolgen.

Die Lösung der Aufgabe erfolgt durch eine heiss applizier- und härtbare Dichtungsmasse auf Basis von Polysulfidpolymeren unter Mitverwendung von Härtungsmitteln und gegebenenfalls Füllstoffen, Weichmachern, Haftvermittlern, Pigmenten, Farbstoffen, Stabilisatoren, Beschleunigern, Verzögerern, dadurch gekennzeichnet, dass als Polysulfidpolymere eine Mischung aus einem festen Polysulfidkautschuk und endständigen SH-Gruppen und einem flüssigen Polysulfidpolymer mit endständigen SH-Gruppen in einem Gewichtsverhältnis von 100 : 5 bis 15 eingesetzt wird.

Mischungen aus festen merkaptoendständigen Polysulfidkautschuken mit flüssigen merkaptoendständigen Polysulfidpolymeren sind bekannt. Sie werden in der Kautschukindustrie zur Herstellung von hoch lösungsmittelbeständigen Artikeln verwendet. Dazu werden die Mischungen, die noch Füllstoffe und Härtungsmittel enthalten, in den in der Kautschukindustrie üblichen Vulkanisationsanlagen bei Temperaturen von 145 - 160°C verformt und gehärtet.

Es war aber nicht bekannt, dass man durch Abmischen von merkaptoendständigen festen Polysulfidkautschuken mit merkaptoendständigen flüssigen Polysulfidpolymeren Massen herstellen kann, die im Temperaturbereich von etwa 100°C so pastös sind, dass sie mit in der Dichtstoffbranche üblichen Applikationsgeräten ausspritzbar sind. Es hat sich völlig unerwartet gezeigt, dass ein fester, nicht thermoplastischer Polysulfidkautschuk mit endständigen SH-Gruppen durch Einarbeiten von 5 bis 15 Gew.-% flüssigen Polysulfidpolymeren in ein Material umgewandelt wird, das thermoplastisches Verhalten zeigt.

Aus diesem Gemisch hergestellte Dichtungsmassen stellen ein Einkomponenten-System dar, da das entsprechende Härtungsmittel gleich mit eingearbeitet wird. Die Härtung bzw. Oxidation der endständigen SH-Gruppen zu -S-S-Gruppen erfolgt jedoch erst bei erhöhter Temperatur. Bei 50°C bis 100°C erweichen die Massen so weit, dass sie pumpfähig und leicht ausspritzbar sind. Die Verarbeitbarkeit der Massen bei 100°C ist über mehrere Stunden gewährleistet, während die Verarbeitbarkeit bei 140°C bis 160°C nur einige Minuten beträgt. Als Oxidationsmittel hat sich die an sich bekannte Kombination von p-Chinondioxim/Zinkoxid bezüglich einer guten Lagerstabilität der Massen besonders bewährt.

Aber auch andere sogenannte latente Härtungsmittel, die die Merkaptogruppen erst bei höherer Temperatur oxidieren, wie z.B. Zinkperoxid, organische Hydroperoxide, Furfurol oder aromatische Nitroverbindungen können, gegebenenfalls mit zusätzlichen Beschleunigern einzeln oder kombiniert, als Härter verwendet werden.

Die Menge der Oxidationsmittel richtet sich nach dem SH-Gehalt der Polysulfidmischung. Es muss gewährleistet sein, dass alle SH-Gruppen oxidiert werden können. Im allgemeinen wird man daher einen etwa 25 - 50%igen Überschuss über die stöchiometrisch notwendige Menge an Oxidationsmittel verwenden.

Diesen Mischungen aus Polysulfidkautschuk, Polysulfidpolymer und Oxidationsmittel können wahlweise noch Füllstoff (Kreiden, Russ, Schwerspat, Silicate u.a.), Weichmacher (Phthalate, chlorierte Paraffine u.a.), Pigmente, Farbstoffe, Haftvermittler, Stabilisatore, Beschleuniger und Verzögerer zugegeben werden, um so die Massen mit den gewünschten Eigenschaften herzustellen. Die Herstellung dieser Massen erfolgt mit Hilfe in der Kautschukindustrie üblicher Mischmaschinen wie z.B. Walzen, Kneter oder Planetenmischer. Dabei kann die Aufbereitung der Polysulfidkautschuk-/polymermischung separat erfolgen und die weiteren Zusatzstoffe nachträglich zugefügt werden oder die Mischung wird in einem Ansatz durch gleichzeitiges Vermischen aller Komponenten hergestellt.

Die so hergestellten Massen können mehrere Monate bei Raumtemperatur gelagert werden, ohne dass eine merkliche Vernetzung beobachtet wird, d.h., auch nach einer mehrmonatigen Lagerung bei Raumtemperatur ist die gute Verspritzbarkeit bei Temperaturen um 100°C noch gewährleistet. Nach dem Ausspritzen werden die Massen auf Temperaturen von 140 - 160°C erhitzt und härten zu einem gummielastischen Produkt aus. Die ausgehärteten Massen sind nicht mehr thermoplastisch.

Aufgrund ihrer Eigenschaften sowohl hinsichtlich der Verarbeitung als auch nach der Aushärtung eignen sich die erfindungsgemässen Massen für alle Anwendungen, bei denen Werkstoffe bei höheren Temperaturen mit einem hochelastischen, alterungsbeständigen Material verklebt werden sollen. Insbesondere eignen sich diese Massen zur Herstellung von Isolierglaseinheiten, wobei es gleichgültig ist, ob die Isolierglasscheiben nach herkömmlichen Verfahren durch Einspritzen der Dichtungsmasse in den Raum zwischen den beiden Scheiben und dem Steg hergestellt werden oder nach anderen Verfahren wie z.B. der Aufbringung der Dichtungsmasse auf den Steg und anschliessendes Anpressen der Scheiben.

In den nachfolgenden Beispielen werden die erfindungsgemässen Massen näher beschrieben und erläutert. Die Mengenangaben betreffen Gewichtsteile.

### Beispiel 1

| 100 | Teile Polysulfidkautschuk 1) |
| 15 | Teile Polysulfidpolymer 2) |
| 2 | Teile p-Chinondioxim |
| 0,5 | Teile Zinkoxid |
| 10 | Teile Russ |
| 90 | Teile Füllstoff |
| 20 | Teile Weichmacher |

1) Der verwendete Polysulfidkautschuk entspricht der allgemeinen Formel

$$HS - R - S(S - R - S)_n S - R - SH$$

wobei $n \cong 500$

$R = - CH_2CH_2OCH_2OCH_2CH_2 -$ (98%) bedeuten.

Molekulargewicht = 80 000

2) Das verwendete Polysulfidpolymer ist ein niedermolekulares Produkt entsprechend der allgemeinen Formel des Polysulfidkautschuks.

Das Molekulargewicht beträgt etwa 1000
SH-Gehalt: 5,9 - 7,7%
Viskosität bei 20°C: 100 mPa·s

Die Herstellung der Masse erfolgte durch Vermischung der Komponenten in einem Vakuuminnenmischer in einem Ansatz. Es ist darauf zu achten, dass die Mischtemperatur möglichst nicht über 80 - 100°C ansteigt.

Lagerstabilität bei R.T.:   mehr als 3 Monate
«   bei 50°C:   mehr als 8 Tage
«   bei 100°C:  mehr als 5 h
Härtung bei 160°C: etwa 15 Minuten
Die Masse ist bei einer Temperatur von 70 - 100°C gut spritzbar.

### Beispiel 2

| 100 | Teile Polysulfidkautschuk |
| 7,5 | Teile Polysulfidpolymer |
| 1,75 | Teile p-Chinondioxim |
| 0,5 | Teile Zinkoxid |
| 160 | Teile Schwerspat |
| 3 | Teile Russ |
| 2 | Teile hochdisperse Kieselsäure |

Herstellung analog Beispiel 1
Lagerstabilität bei R.T.:   mehr als 3 Monate
«   bei 50°C:   mehr als 8 Tage
«   bei 100°C:  mehr als 5 h
Die Masse ist bei 70°C bis 100°C sehr gut spritzbar.
Härtung bei 160°C: etwa 6 Minuten
Härte nach der Aushärtung: 35 Shore A
Eine Probe einer ausgehärteten Masse wurde bei 20°C und bei 80°C jeweils um 25% gedehnt und anschliessend entlastet.
Die Rückstellung erfolgte sofort zu 100%.

### Beispiel 3

| 100 | Teile Polysulfidkautschuk |
| 7,5 | Teile Poylsulfidpolymer |
| 6 | Teile Zinkperoxid |
| 1 | Teil Calziumhydroxid |
| 160 | Teile Schwerspat |
| 3 | Teile Russ |
| 2 | Teile hochdisperse Kieselsäure |

Vermischung der Komponenten wie in Beispiel 1
Lagerstabilität bei 100°C: mehr als 2 h
Härtung bei 160°C: etwa 6 Minuten
Die Spritzbarkeit der Masse bei Temperaturen um 100°C ist sehr gut.

## Patentansprüche

1. Heiss applizier- und härtbare Dichtungsmasse auf Basis von Polysulfidpolymeren unter Mitverwendung von Härtungsmitteln und gegebenenfalls Füllstoffen, Weichmachern, Haftvermittlern, Pigmenten, Farbstoffen, Stabilisatoren, Beschleunigern, Verzögerern, dadurch gekennzeichnet, dass als Polysulfidpolymere eine Mischung aus einem festen Poylsulfidkautschuk mit endständigen SH-Gruppen und einem flüssigen Polysulfidpolymer mit endständigen SH-Gruppen in einem Gewichtsverhältnis von 100 : 5 bis 15, eingesetzt wird.

2. Dichtungsmasse nach Anspruch 1, dadurch gekennzeichnet, dass als Härtungsmittelkombination p-Chinondioxim/Zinkoxid eingesetzt wird.

3. Dichtungsmasse nach Anspruch 1, dadurch gekennzeichnet, dass als Härtungsmittel Zinkperoxid eingesetzt wird.

4. Verwendung der Dichtungsmasse nach den Ansprüchen 1 bis 3, zur Herstellung von Isolierglaseinheiten.

## Claims

1. A heat applicable and hardenable sealing composition based on polysulfide polymers comprising curing agents and possibly fillers, plasticizers, adhesive agents, pigments, dyes, stabilizers, accelerators or retarders, characterized in that as polysulfide polymers a mixture of a solid polysulfide rubber with terminal SH groups and a liquid polysulfide polymer with terminal SH groups is used, the weight ratio of solid polysulfide to liquid polysulfide being 100 : 5 to 15.

2. The sealing composition as in claim 1, wherein p-quinone dioxime/zinc oxide is used as the hardening agent.

3. The sealing composition as in claim 1, wherein zinc peroxide is used as the hardening agent.

4. Use of the sealing composition of the claims 1 to 3 for the production of insulating glass units.

## Revendications

1. Produit d'étanchéification applicable et durcissable à chaud à base de polysulfures polymères, avec des durcisseurs et le cas échéant des charges, plastifiants, adjuvants d'adhérence, pigments, colorants, stabilisants, accélérateurs, retardateurs, produit caractérisé en ce qu'il comprend comme polysulfures polymères un mélange d'un caoutchouc de polysulfure solide à groupes SH terminaux et d'un polysulfure polymère liquide également à groupes SH terminaux dans un rapport pondéral compris entre 100 : 5 et 100 : 15.

2. Produit d'étanchéification selon la revendication 1, caractérisé en ce que l'agent durcisseur est constitué par une association de p-quinone-dioxime et d'oxyde de zinc.

3. Produit d'étanchéification selon la revendication 1, caractérisé en ce que le durcisseur est du peroxyde de zinc.

4. L'utilisation d'un produit d'étanchéification selon l'une quelconque des revendications 1 à 3 pour la fabrication d'éléments isolants en verre.